# DEMANDE DE BREVET EUROPEEN

(11) **EP 1 705 772 A2**
(43) Date de publication de la demande: **27.09.2006**
(21) Numéro de dépôt: 06300212.5
(22) Date de dépôt: 08.03.2006
(51) Int. Cl.: H02G 15/072

(54) **Extrémité synthétique de câble électrique pour tension continue**

(30) Priorité: 21.03.2005 FR 5050728
(71) Demandeur: Nexans, 75008 Paris (FR)
(72) Inventeur: Janah, Hakim, 62137, COULOGNE (FR); Mirebeau, Pierre, 91140, VILLEBON SUR YVETTE (FR); Cardinaels, Josef, B-9230, WETTEREN (BE); Gahungu, François, 62100, CALAIS (FR); Matallana, Jérôme, 62370, SAINTE MARIE KERQUE (FR)
(74) Mandataire: Lenne, Laurence

(57) **Abrégé**

L'invention concerne une extrémité synthétique (10) d'un câble électrique (12) pour tension continue.

Selon l'invention, l'extrémité synthétique comporte un insert composite (22) placé entre l'isolant interne (24) et le manchon externe isolant (40) du câble, l'insert ayant généralement la forme d'un fourreau entourant l'isolant interne sur la partie partiellement dénudée du câble et étant composé d'une partie résistive (34) à résistivité élevée et d'une partie semi-conductrice (36) moins résistive, l'interface entre lesdites parties résistive et semi-conductrice formant un déflecteur (38), l'extrémité (72) de la partie résistive opposée au déflecteur étant électriquement reliée au conducteur central (60) du câble et l'extrémité de la partie semi-conductrice (36) opposée au déflecteur étant électriquement reliée au semi-conducteur externe (80) du câble.

Application à la connexion de câbles électriques haute tension.

## Description

La présente invention a pour objet une extrémité synthétique de câble électrique pour tension continue permettant de raccorder un câble électrique à moyenne ou haute tension à un équipement, tel que par exemple une ligne de transport de courant sous haute tension.

Les câbles électriques sont constitués d'un conducteur central entouré de plusieurs couches constituant le système d'isolation, d'au moins un écran métallique relié à la terre et d'un gaine de protection extérieure. Les différents constituants du câble ont notamment pour fonction de protéger les personnes et les animaux contre l'électrocution, d'éviter des décharges électriques dans le milieu entourant le câble, tel que l'air, et de minimiser les pertes d'énergie lors du transport du courant. Cependant, à l'extrémité du câble, le conducteur central sous haute tension n'est distant de l'écran métallique relié à la terre que de quelques millimètres. Cette distance est de loin très inférieure à la tension de claquage du milieu dans lequel se trouve l'extrémité du câble (l'air par exemple), ce qui conduit à un court-circuit. Compte tenu de l'importance du champ électrique régnant dans les parties isolantes d'un système de câblage, en particulier au voisinage des interfaces, il est nécessaire de contrôler la densité de champ électrique en aménageant la structure des extrémités des câbles sous haute tension, avec une contrainte supplémentaire qui est la non destruction de l'extrémité du câble en cas de surtension ou de choc électrique provoqué par exemple par la foudre.

La demande de brevet WO 00/74191 A1 décrit une structure d'extrémité de câble haute tension comportant une couche résistive entourant le câble et connectée à l'une de ses extrémités à la haute tension et à son autre extrémité à la terre. Un cône de contrainte entoure la couche résistive du côté de la partie reliée à la terre. Cette structure peut conduire cependant à des performances non satisfaisantes en cas de choc électrique ou pendant des manoeuvres, telles que par exemple la coupure du courant ou une inversion de polarité.

La demande de brevet FR 2 480 039 propose de disposer une électrode de réduction des contraintes électriques au niveau de l'arrêt d'écran, autour de la périphérie de l'isolant du conducteur électrique. Cette électrode comporte plusieurs zones contiguës présentant des résistances électriques différentes. La résistance électrique de l'électrode de contrainte est choisie non linéaire. Elle varie en fonction de à tension appliquée de sorte que l'intensité du courant traversant l'électrode ne varie pas linéairement avec la tension. De plus, l'électrode de contrainte est montée flottante à l'une de ses deux extrémités. La structure proposée dans cette demande de brevet présente l'inconvénient d'un fonctionnement non satisfaisant en courant continu.

La présente invention propose une extrémité synthétique d'un câble électrique ayant une durée de vie et un fonctionnement satisfaisants en tension continue et sous haute tension, et capable de supporter des chocs électriques relativement importants. Le terme "synthétique" signifie que l'extrémité est réalisée avec des matériaux solides (comme des polymères par exemple), et n'utilise donc aucun liquide (comme de l'huile). A titre d'exemple, la tension de fonctionnement peut être de l'ordre de 150 KV en courant continu, avec des tensions de test en continu et en choc de foudre voisines respectivement de 300 KV et de 350 KV.

De façon plus précise, la présente invention propose une extrémité synthétique d'un câble électrique pour tension continue comprenant un conducteur central destiné à être mis sous haute tension et entouré successivement d'un semi-conducteur interne, d'un isolant, d'un semi-conducteur externe et d'un écran métallique destiné à être relié à la terre, selon laquelle l'extrémité du câble est partiellement dénudée en enlevant le semi-conducteur externe et l'écran métallique. L'extrémité synthétique, qui comprend un manchon externe isolant, est caractérisée en ce qu'elle comporte un insert composite placé entre l'isolant interne du câble et le manchon externe isolant , l'insert ayant généralement la forme d'un fourreau entourant l'isolant interne sur la partie partiellement dénudée du câble et étant composé d'une partie résistive à résistivité élevée et d'une partie semi-conductrice moins résistive, l'interface entre lesdites parties résistive et semi-conductrice formant un déflecteur, l'extrémité de ladite partie résistive opposée au déflecteur étant électriquement reliée au conducteur central et l'extrémité de ladite partie semi-conductrice opposée au déflecteur étant électriquement reliée au semi-conducteur externe.

De façon avantageuse, la résistivité de ladite partie résistive de l'insert est inférieure de plusieurs ordres de grandeur à la résistivité de l'isolant interne du câble. La résistivité volumique transversale de cette partie résistive peut être comprise entre 10¹¹ O.cm et 10¹⁶ O.cm entre 20 et 90°C pour un champ électrique appliqué compris entre 5 et 50 kV/mm et peut être par exemple réalisée en élastomère synthétique réticulé de type EPDM.

La résistivité volumique longitudinale de la partie semi-conductrice de l'insert est avantageusement de l'ordre de grandeur de la résistivité du semi-conducteur externe du câble et peut être par exemple comprise entre 100 O.cm et 10000 O.cm dans l'intervalle de température de 20 à 90°C.

Selon un mode de réalisation préféré, l'extrémité de ladite partie semi-conductrice de l'insert opposée audit déflecteur recouvre l'extrémité dénudée dudit semi-conducteur externe.

Selon un mode de réalisation avantageux, le conducteur central comporte à son extrémité une partie dénudée commençant à l'extrémité de ladite partie résistive de l'insert opposée au déflecteur, ladite extrémité synthétique comportant des moyens pour relier électriquement ladite partie dénudée avec ladite extrémité de la partie résistive de l'insert.

Selon une réalisation avantageuse, le manchon externe isolant recouvre l'extrémité de la partie semi-conductrice de l'insert opposée au déflecteur et est sensiblement en retrait de l'extrémité de la partie résistive de l'insert opposée au déflecteur. Le conducteur central se termine par une cosse de connexion et une pièce isolante recouvre l'extrémité du coté haute tension du manchon externe isolant jusqu'à la cosse de connexion.

De préférence, la surface externe du manchon externe isolant a généralement la forme d'un ensemble d'ailettes d'isolation et le manchon externe isolant se termine du coté terre par un cône de contrainte.

D'autres avantages et caractéristiques de l'invention apparaîtront au cours de la description qui suit d'un mode de réalisation de l'invention, donné à titre d'exemple non limitatif, en référence aux dessins annexés et sur lesquels :
- la figure 1 est une vue générale, en coupe longitudinale, d'un mode de réalisation de l'invention,
- la figure 2 montre un insert conforme à l'invention disposé autour de l'isolant interne du câble,
- la figure 3 est une coupe longitudinale de l'insert au niveau du déflecteur,
- la figure 4 illustre en coupe longitudinale la connexion de l'extrémité synthétique à la haute tension, et
- la figure 5 illustre en coupe longitudinale la connexion de l'extrémité synthétique du coté du câble.

De façon générale, un câble pour le transport du courant électrique sous haute tension, de l'ordre de 150 KV ou plus, est composé d'un conducteur central (ou âme centrale) entouré successivement d'un semi-conducteur interne (désigné aussi par "écran sur le conducteur") dont le but est d'obtenir des équipotentielles de forme sensiblement cylindrique autour du conducteur, d'un isolant, d'un semi-conducteur externe (désigné aussi par "écran sur l'isolant"), d'un écran métallique relié à la terre et enfin d'une gaine externe. Les fonctions principales de l'écran métallique sont de protéger les personnes et les animaux en cas de contact avec le câble et de transporter le courant de capacité ou de court-circuit en cas de choc électrique, dû à la foudre par exemple.

A titre d'exemple, pour un câble de diamètre 95 mm², l'épaisseur totale des couches isolantes est d'environ 5 mm. A l'arrêt du câble, autrement dit à son extrémité qui se trouve généralement dans l'air, la distance séparant le conducteur central de l'écran métallique n'est donc que de 5 mm. Cette distance est bien trop faible pour éviter un court-circuit entre le conducteur central sous haute tension et l'écran métallique relié à la terre. La structure des extrémités synthétiques a pour but d'augmenter cette distance radiale de 5 mm en une distance longitudinale qui, à titre d'exemple, peut être de l'ordre de 1,5 m. L'extrémité du câble est alors partiellement dénudée sur cette distance longitudinale de façon à mettre à nu le conducteur central à l'extrémité du câble pour pouvoir le connecter. L'extrémité synthétique de la présente invention concerne des câbles qui, bien entendu, ne sont pas limités à des diamètres de l'ordre de 95 mm², mais qui peuvent atteindre 1600 mm² ou plus.

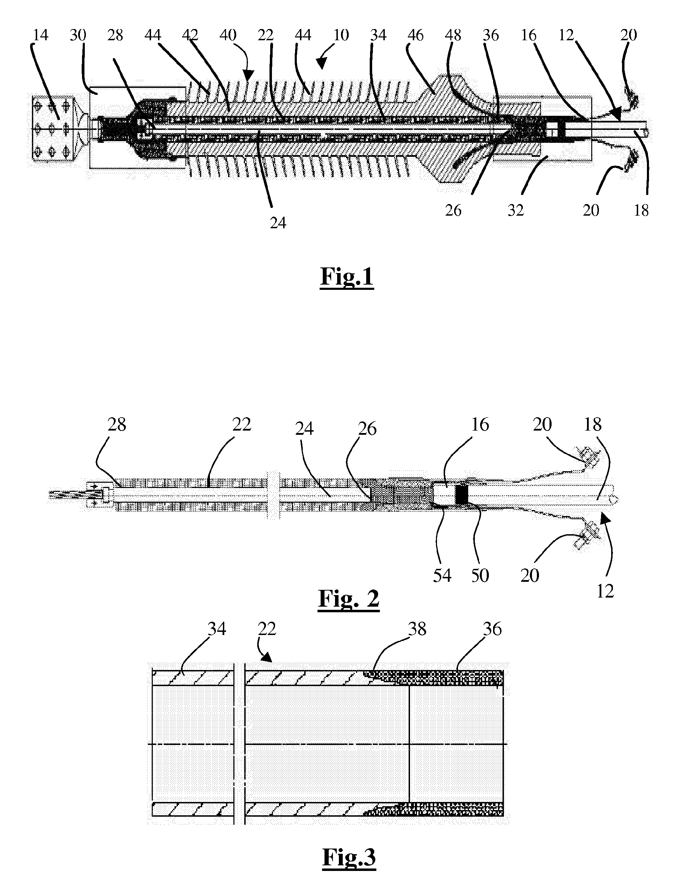

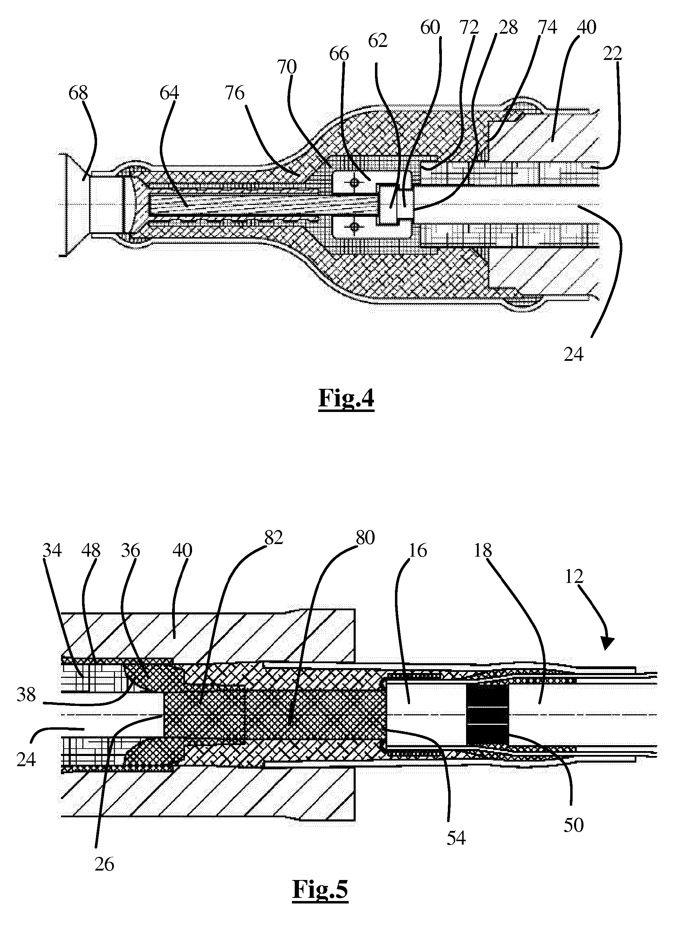

Sur la figure 1, l'extrémité synthétique 10 conforme à l'invention comporte une partie reliée au câble 12 située sur la partie droite de la figure 1 ("coté terre" ou "coté du câble 12") et une partie destinée à être reliée à la haute tension par une cosse de connexion 14 et située sur la partie gauche de la figure 1 ("coté haute tension"). L'extrémité du câble est partiellement dénudée en enlevant la gaine extérieure 18, l'écran métallique 16 et le semi-conducteur externe comme il sera décrit en détails en regard de la figure 5. L'écran métallique 16 du câble est relié à des prises de terre 20.

L'extrémité synthétique 10 comporte selon l'invention un insert 22 entourant, à la manière d'un fourreau, l'isolant 24 du câble. L'insert s'étend du côté du câble 12 depuis l'arrêt 26 du semi-conducteur externe, en le recouvrant légèrement, jusqu'à l'arrêt 28 de l'isolant 24 du côté haute tension (les parties de l'extrémité synthétique 10 délimitées par les rectangles 30 et 32 seront décrites en détails ci-après en regard des figures 4 et 5). L'insert 22 se compose de deux parties adjacentes, une première partie 34, appelée partie résistive, et une deuxième partie 36, appelée partie semi-conductrice, dont l'interface forme un déflecteur 38 (voir figure 3). Ce dernier a une forme évasée dont la partie la plus large se situe à la jonction avec la partie résistive 34 de l'insert. La partie résistive de l'insert est réalisée en un matériau résistif désigné habituellement par EPDM (un élastomère synthétique réticulé) dont la résistivité est de plusieurs ordres de grandeur inférieure à la résistivité de l'isolant du câble pour une valeur de champ électrique appliqué et de température donnés. La résistivité de cette partie résistive de l'insert peut être comprise entre 10¹¹ O.cm et 10¹⁶ O.cm, par exemple voisine de 10¹² O.cm, alors que la résistivité de l'isolant du câble est approximativement de l'ordre de 10¹⁶ O.cm. La résistivité de la partie semi-conductrice de l'insert, située du côté du câble, est voisine de celle du semi-conducteur externe du câble. Elle peut être comprise par exemple entre 100 O.cm et 10000 O.cm, par exemple voisine de 300 O.cm. Les résistances électriques des parties résistive et semi-conductrice de l'insert sont sensiblement linéaires, donc peu dépendantes du champ électrique auquel elles sont soumises. L'insert agit comme un répartiteur électrique actif en courant continu, assurant une décroissance résistive sensiblement linéaire de la tension depuis le côté haute tension jusqu'au côté terre. A titre d'exemple, la longueur totale de l'insert peut être approximativement égale à 1,5 m et une épaisseur d'environ 10 mm, avec une longueur pour le déflecteur 38 égale à environ 0,10 m.

Un manchon électriquement isolant 40 entoure l'insert 22 sur pratiquement toute sa longueur. Il est avantageusement réalisé en un caoutchouc silicone communément appelé LSR (pour Liquid Silicon Rubber). Le manchon isolant 40 se compose, d'une part, d'une partie 42 s'étendant jusqu'à la partie haute tension et dont la surface extérieure est formée d'une succession d'ailettes d'isolation 44 et, d'autre part, d'un cône de contrainte 46 adjacent à la partie 42. A l'intérieur de ce cône 46 se trouve un déflecteur de champ 48 réalisé en un matériau semi-conducteur. Le déflecteur 48 est électriquement relié à la partie semi-conductrice 26 de l'insert 22. Le but de ce déflecteur est de s'assurer que les lignes de champ électriques restent, idéalement, parallèles à l'axe du conducteur électrique. Le manchon isolant 40, en plus de sa fonction diélectrique d'isolation, a une fonction climatique grâce à ses ailettes 44 qui servent à allonger le parcours du courant de fuite qui se propage le long de la surface extérieure du manchon sur laquelle tend à se déposer une couche conductrice due à la pluie et à la pollution.

La figure 2 représente le câble 12 et l'insert 22 enfilé sur l'isolant interne 24 du câble. La gaine 18 du câble 12 est enlevée complètement à partir du point 50, en direction du coté haute tension (vers la gauche de la figure). L'écran métallique 16, connecté aux prises de terre 20, est de même enlevé à partir du point 54 en direction du coté haute tension. Quant au semi-conducteur externe du câble, il est enlevé à partir du point 26, en direction du coté haute tension. L'insert 22 et l'isolant interne 24 s'étendent jusqu'au point 28 pour ensuite laisser apparent le conducteur central.

La figure 4 représente en coupe et en détails l'extrémité du coté haute tension délimitée par le rectangle 30 sur la figure 1. Le conducteur central 60 sort de l'isolant interne 24 à l'arrêt 28 de cet isolant et se termine par un anneau usiné 62. Le conducteur central est connecté à un conducteur multifils câblé 64 à l'aide d'une coque métallique anti-rétraction 66 en demie coquilles qui enserre, d'une part, l'extrémité du conducteur central 60 et, d'autre part, le conducteur multifils 64 afin d'éviter que le câble se rétracte et se dénude. Le conducteur multifils 64 est connecté à son extrémité 68 à la cosse de connexion 14 de la figure 1. Une pièce moulée conductrice 70 entoure l'insert 22 à son extrémité 72, la coque 66 et le conducteur multifils 64. Ces éléments 70, 22, 66 et 64 sont donc au même potentiel électrique, à savoir la haute tension du conducteur central 60, grâce aux moyens de connexion constitués par la pièce 70. L'extrémité 72 de la partie résistive 34 de l'insert 22 est donc électriquement connectée à la haute tension. L'extrémité 74 du manchon isolant 40 est légèrement en retrait par rapport à l'extrémité 72 de l'insert 22. Un capuchon 76 en matière isolante, par exemple en silicone ou en EPDM, entoure la pièce moulée 70 et les extrémités du manchon isolant 40 et de l'insert 22.

La figure 5 représente en coupe et en détails le côté terre de l'extrémité synthétique 10 encadré par le rectangle 32 de la figure 1. Comme déjà indiqué en regard de la figure 2, la gaine 18, l'écran métallique 16 et le semi-conducteur externe 80 du câble 12 sont enlevés à partir des points respectivement 50, 54 et 26, en direction du coté haute tension. La partie semi-conductrice 36 de l'insert 22 entoure l'extrémité 82 du semi-conducteur externe 80 du câble 12. Le semi-conducteur externe 80 est en contact avec l'écran métallique 16, lequel est relié à la terre : il est donc électriquement relié à la terre. II en est de même de la partie semi-conductrice 36 de l'insert. Sur la figure 5, on remarque le début du déflecteur de champ 48, en contact avec la partie semi-conductrice 36 de l'insert 22. Le déflecteur 38 forme l'interface entre les parties résistive 34 et semi-conductrice 36 de l'insert. Le déflecteur 38 est situé sous le début du déflecteur 48, ces deux déflecteurs étant en contact. On obtient ainsi une bonne continuité électrique entre ces deux déflecteurs. Le manchon externe isolant 40 recouvre l'extrémité du semi-conducteur externe 80 du câble et la partie semi-conductrice 36 de l'insert.

Grâce à l'insert conforme à la présente invention, la chute de potentiel entre la haute tension et la terre est progressive. Le champ électrique remonte le long de l'insert au lieu de disparaître brutalement en se renforçant au niveau de l'arrêt du semi-conducteur externe lorsque l'insert est absent. Du fait de la progressivité du gradient de champ électrique, la tenue de l'extrémité synthétique en tension continue se trouve améliorée, ainsi que sa longévité.

## Revendications

1. Extrémité synthétique (10) d'un câble électrique (12) pour tension continue comprenant un conducteur central (60) destiné à être mis sous haute tension et entouré successivement d'un isolant interne (24), d'un semi-conducteur externe (80) et d'un écran métallique (16) destiné à être relié à la terre (20), selon laquelle l'extrémité du câble est partiellement dénudée en enlevant le semi-conducteur externe et l'écran métallique, l'extrémité synthétique (10), qui comprend un manchon externe isolant (40), est **caractérisée en ce qu'**elle comporte un insert composite (22) placé entre ledit isolant interne (24) et ledit manchon externe isolant (40), ledit insert ayant généralement la forme d'un fourreau entourant ledit isolant interne sur la partie partiellement dénudée du câble et étant composé d'une partie résistive (34) à résistivité élevée et d'une partie semi-conductrice (36) moins résistive, l'interface entre lesdites parties résistive et semi-conductrice formant un déflecteur (38), l'extrémité (72) de ladite partie résistive opposée au déflecteur étant électriquement reliée au conducteur central (60) et l'extrémité de ladite partie semi-conductrice (36) opposée au déflecteur étant électriquement reliée au semi-conducteur externe (80).

2. Extrémité synthétique selon la revendication 1 **caractérisée en ce que** la résistivité de ladite partie résistive (34) de l'insert est inférieure de plusieurs ordres de grandeur à la résistivité de l'isolant interne (24) du câble.

3. Extrémité synthétique selon la revendication 2 **caractérisée en ce que** la résistivité volumique transversale de ladite partie résistive (34) de l'insert est comprise entre 10¹¹ O.cm et 10¹⁶ O.cm entre 20 et 90°C pour un champ électrique appliqué compris entre 5 et 50 kV/mm.

4. Extrémité synthétique selon la revendication 2 ou 3 **caractérisée en ce que** ladite partie résistive (34) de l'insert est réalisée en élastomère synthétique réticulé EPDM.

5. Extrémité synthétique selon l'une des revendications précédentes **caractérisée en ce que** la résistivité de la partie semi-conductrice (36) de l'insert est de l'ordre de grandeur de la résistivité du semi-conducteur externe du câble.

6. Extrémité synthétique selon la revendication 5 **caractérisée en ce que** la résistivité volumique longitudinale de ladite partie semi-conductrice (36) de l'insert est comprise entre 100 O.cm et 10000 O.cm dans l'intervalle de température de 20 à 90°C.

7. Extrémité synthétique selon l'une des revendications précédentes **caractérisée en ce que** l'extrémité (82) de ladite partie semi-conductrice de l'insert opposée audit déflecteur recouvre l'extrémité dénudée dudit semi-conducteur externe (80).

8. Extrémité synthétique selon l'une des revendications précédentes **caractérisée en ce que** le conducteur central (80) comporte à son extrémité une partie dénudée commençant à l'extrémité (28) de ladite partie résistive de l'insert opposée au déflecteur, ladite extrémité synthétique (10) comportant des moyens (70) pour relier électriquement ladite partie dénudée avec ladite extrémité de la partie résistive de l'insert.

9. Extrémité synthétique selon l'une des revendications précédentes **caractérisée en ce que** l'extrémité (62) dudit conducteur central est reliée à un conducteur multifils (64) à l'aide d'une pièce de connexion (66)

10. Extrémité synthétique selon l'une des revendications précédentes **caractérisée en ce que** ledit manchon externe isolant (40) recouvre l'extrémité de la partie semi-conductrice (36) de l'insert opposée au déflecteur (38) et est sensiblement en retrait de l'extrémité (72) de la partie résistive (34) de l'insert opposée au déflecteur.

11. Extrémité synthétique selon la revendication 10 **caractérisée en ce que** ledit conducteur central (60) se termine par une cosse de connexion (14) et **en ce qu'**un capuchon isolant (76) recouvre l'extrémité du coté haute tension dudit manchon externe isolant jusqu'à ladite cosse de connexion.

12. Extrémité synthétique selon l'une des revendications précédentes **caractérisée en ce que** la surface externe dudit manchon externe isolant (40) a généralement la forme d'un ensemble d'ailettes d'isolation (44) et **en ce que** ledit manchon externe isolant se termine du coté terre par un cône de contrainte (46).

13. Extrémité synthétique selon la revendication 12 **caractérisée en ce qu'**elle comporte un déflecteur de champ (48) placé à l'intérieur dudit cône de contrainte (46) et électriquement relié audit semi-conducteur externe (80) dudit câble.

14. Extrémité synthétique selon la revendication 13 **caractérisée en ce qu'**une partie dudit déflecteur de champ (48) du manchon extérieur isolant (40) entoure au moins en partie ledit déflecteur (38) de l'insert, lesdits déflecteurs étant en contact électrique afin de former une continuité électrique.
